Europäisches Patentamt

European Patent Office

Office européen des brevets

(19)

(11) Veröffentlichungsnummer: **0 059 408**
**A1**

(12) # EUROPÄISCHE PATENTANMELDUNG

(21) Anmeldenummer: **82101342.2**

(22) Anmeldetag: **23.02.82**

(51) Int. Cl.³: **B 29 F 3/12**
**B 29 F 3/01, B 29 F 1/12**

(30) Priorität: **26.02.81 DE 3107214**

(43) Veröffentlichungstag der Anmeldung:
**08.09.82 Patentblatt 82/36**

(84) Benannte Vertragsstaaten:
**AT CH FR GB IT LI**

(71) Anmelder: **Mannesmann Demag Kunststofftechnik**
**Zweigniederlassung der Mannesmann Demag**
**Aktiengesellschaft**
**Altdorfer Strasse 15**
**D-8501 Schwaig(DE)**

(72) Erfinder: **Stuis, Georg**
**Nötteleinweg 16**
**D-8500 Nürnberg 50(DE)**

(74) Vertreter: **LOUIS, PÖHLAU, LOHRENTZ & SEGETH**
**Kesslerplatz 1**
**D-8500 Nürnberg(DE)**

(54) **Schneckenmaschine zur Herstellung von mehrfarbigen Kunststoffteilen.**

(57) Eine Schneckenmaschine zur Verarbeitung mindestens zweier verschiedener Kunststoffmaterialien zum Zweck, aufgrund eines am fertigen Kunststoffteil vorhandenen Gemenges dieser Kunststoffmaterialien einen Marmoreffekt zu erzielen. Die Schneckenmaschine weist zwei voneinander getrennte, axial hintereinander liegende Schneckenabschnitte (5, 6) auf, die jeweils mit einer im Zylinder (1) der Schneckenmaschine vorgesehenen Einfüllöffnung (9 bzw. 10) verbunden und durch diese mit Kunststoffmaterial beaufschlagbar sind. Der Schneckengang (7) in dem vorderen Schneckenabschnitt (5) steht unmittelbar mit einer Vereinigungsstelle für die Kunststoffmaterialien vor der Schneckenspitze in Verbindung; der Schneckengang (8) im hinteren Schneckenabschnitt (6) ist mit dieser Vereinigungsstelle über Durchbrüche (14) in der Schnecke (2) verbunden, die vom hinteren Schneckenabschnitt (6) zu einer im vorderen Schneckenabschnitt (5) ausgebildeten Hohlbohrung (15) führen. Diese Hohlbohrung (15) mündet an der Schneckenspitze. Folglich besteht eine einwandfreie Trennung der nach Farbe und/oder Eigenschaft unterschiedlichen Kunststoffmaterialien bis zu der Vereinigungsstelle, so daß die vor dem Auspressen durch die Düse (3) des Zylinders (1) zur Verfügung stehende Zeit für eine Vermischung nicht ausreicht und somit das für den Marmoreffekt gewünschte Gemenge erzielt wird.

EP 0 059 408 A1

- 1 -

Schneckenmaschine zur Herstellung von mehrfarbigen Kunststoffteilen

----------------------------------------------------------------

Die Erfindung betrifft eine Schneckenmaschine zur Herstellung von mehrfarbigen Kunststoffteilen, die durch
ein Gemenge von mindestens zwei verschiedenen Kunststoffmaterialien einen Marmoreffekt aufweisen.
Solche Schneckenmaschinen besitzen einen Zylinder und
eine drehbar darin gelagerte Schnecke mit mindestens
zwei voneinander getrennten Schneckengängen, von denen
jeder durch eine von zwei hintereinander im Zylinder
ausgebildeten Einfüllöffnungen mit einem der Kunststoffmaterialien beaufschlagbar ist und die die beiden
Kunststoffmaterialströme zu einer Vereinigungsstelle
vor der Schneckenspitze fördern.

Bei einer bekannten Schneckenmaschine der vorstehend
beschriebenen Art (DE-OS 28 36 842) verlaufen die
beiden voneinander getrennten Schneckengänge parallel
zueinander, wobei sich allerdings ein Schneckengang
nur über einen Teil der Länge des anderen Schneckenganges zu der ihm zugeordneten Einfüllöffnung hin
erstreckt. Da der längere Schneckengang von seiner Einfüllöffnung aus mit Kunststoffmaterial beschickt wird und der entsprechende Kunststoffmaterialstrom den Schneckengang unter der davor liegenden Einfüllöffnung schon voll ausfüllt, wird er mit dem von dort zugelieferten Kunststoffmaterial nicht mehr gefüllt, so daß eine Trennung zwischen den beiden Kunststoffmaterialien aufrecht erhalten bleibt, bis diese vor der Schneckenspitze der Vereinigungsstelle zugeführt werden. Obwohl sich eine Schneckenmaschine dieser Art an sich bewährt hat, können insbesondere bei Verwendung von im Verarbeitungszustand sehr dünnflüssigen Kunststoffen vorzeitige, also unerwünschte Farbvermischungen auftreten.

Es sind auch bereits Schneckenmaschinen bekannt, bei denen unterschiedliche Kunststoffmaterialien in getrennten Schneckengängen gefördert werden, von denen sich einer auf der Schneckenaußenseite und einer an der Schneckeninnenwand einer Hohlschnecke befindet (GB-PS 1o 54 443; GB-PS 11 46 783). Der Gang der Innenschnecke wird durch einen exakt an den Schneckengangkämmen anliegenden Dorn begrenzt. Diese Konstruktion ist jedoch außerordentlich aufwendig, da die Innenschnecke mit dem dazu genau passenden Dorn einen hohen Herstellungsaufwand erfordert und überdies bei Störungen durch Festbacken von Kunststoffmaterial und dgl. schwer zugänglich ist. Da außerdem der Zugang zu der Innenschnecke nur über eine Radialbohrung in der Schneckenwand möglich ist, wird das von der Einfüllöffnung her zugeführte Kunststoffmaterial entsprechend der Schneckendrehung nur intermittierend zugeführt, so daß die Innenschnecke diskontinuierlich beaufschlagt wird und dementsprechend arbeitet.

Der Erfindung liegt daher die Aufgabe zugrunde, eine
Schneckenmaschine der eingangs geschilderten Art mit
einer einfachen Konstruktion zu schaffen, die eine
eindeutige Trennung der verarbeiteten Kunststoffmaterialien bis zur Vereinigungsstelle hin auch
bei Verwendung sehr dünnflüssiger Kunststoffe gewährleistet.

Nach der Erfindung wird das dadurch erreicht, daß
je einer der Schneckengänge in einem von zwei axial
voneinander getrennten Schneckenabschnitten ausgebildet ist, die gegeneinander im Zylinder abgedichtet
sind, und daß der in Förderrichtung vordere Schneckengang unmittelbar zur Vereinigungsstelle hin mündet,
während der dahinter liegende Schneckengang über
Durchbrüche in der Schnecke und eine im vorderen
Schneckenabschnitt vorgesehene Hohlbohrung mit der
Vereinigungsstelle verbunden ist.

Nach der Erfindung wird somit vorgeschlagen, die
Schneckengänge nicht parallel zueinander zu führen,
sondern in hintereinander liegenden, voneinander
getrennten Schneckenabschnitten auszubilden. Da
die beiden Schneckenabschnitte gegeneinander im Zylinder
abgedichtet sind, was - insbesondere bei Schneckenspritzgießmaschinen - zweckmässigerweise durch eine dichtend
an der Zylinderinnenwand anliegende Schneckenschaftverdickung erzielt wird, werden beide Schneckengänge
nur von den zugeordneten Einfüllöffnungen her beaufschlagt. Der hintere Schneckengang mündet in Durchbrüchen der Schnecke, die zu einer im vorderen Schneckenabschnitt ausgebildeten Hohlbohrung führen, so daß
einer der Kunststoffmaterialströme im Schneckeninneren
des vorderen Schneckenabschnitts zur Vereinigungsstelle
hin geführt wird. Die dort auftretende Vereinigung der beiden Kunststoffmaterialströme erfolgt so knapp vor dem Ausstossen durch die Düse, daß eine hinreichende Vermischung selbst bei sehr dünnflüssigen Materialien nicht mehr auftreten kann und der erwünschte Marmoreffekt in dem herzustellenden Gießteil erreicht wird. Da beide Schneckengänge kontinuierlich von den zugeordneten Einfüllöffnungen her beaufschlagt werden können, ist es möglich, ihre Geometrie optimal auszulegen, so daß bereits bei einer relativ kurzen Schnecke eine einwandfreie Homogenisierung des Kunststoffmaterials erfolgen kann. Es ist überdies denkbar, die Hohlbohrung so im Querschnitt zu bemessen, daß darin eine gewisse Friktion des Kunststoffmaterials (bei thermoplastischen Stoffen) auftritt, die zu einer weiteren Erwärmung führt. Die Hohlbohrung kann vorteilhafterweise glatt und zylindrisch gehalten werden, so daß eine Reinigung kein Problem darstellt.

Normalerweise wird die Hohlbohrung zentral im vorderen Schneckenabschnitt ausgebildet sein, so daß sie entsprechend zentral an der Schneckenspitze mündet. Es ist aber auch denkbar, eine gewisse Exzentrizität der Hohlbohrung zu erzeugen, wodurch eine Verteilung des von der Hohlbohrung her zugeförderten Kunststoffmaterials in dem Bereich der Vereinigungsstelle bewirkt wird.

Mit der Schneckenmaschine nach der Erfindung ist es möglich, Kunststoffe unterschiedlicher Farbe und sonstiger Eigenschaften zu verarbeiten. Über den einen Schneckenabschnitt können auch Treibmittel und dgl. für den im anderen Schneckenabschnitt verarbeiteten Kunststoff zugeführt werden. Es ist zwar bereits eine Schneckenmaschine bekannt , bei der durch eine Hohlbohrung eines Schneckenabschnitts einem von der Schnecke geförderten Kunststoffmaterial zusätzlicher Kunststoff, z.B. ein Schäummittel, zugeführt werden kann (DE-AS 12 51 943). Die Hohlbohrung bei dieser Schneckenmaschine steht jedoch nicht mit einem Schneckengang in Verbindung und es sind auch nicht zwei voneinander getrennte Schneckengänge in der Schnecke ausgebildet, die unterschiedliche Kunststoffmaterialien fördern. Vielmehr soll mit dieser bekannten Schneckenmaschine ausdrücklich ein Gemisch der Kunststoffe erzeugt werden.

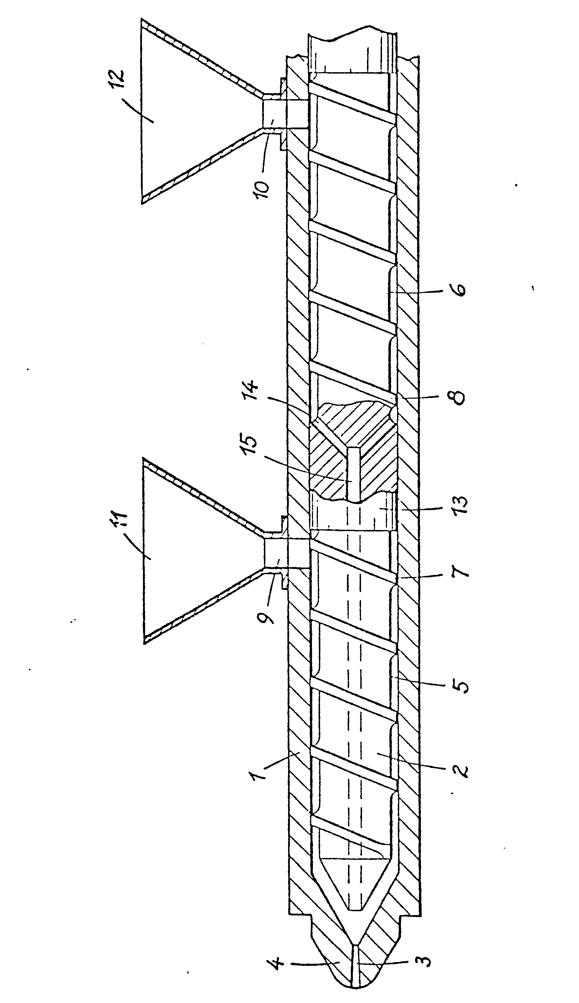

Weitere Vorteile und Merkmale der vorliegenden Erfindung ergeben sich aus der nachfolgenden Beschreibung eines Ausführungsbeispiels anhand der beiliegenden Zeichnung sowie aus weiteren Unteransprüchen.

Die Zeichnung zeigt einen schematischen Längsschnitt durch den Zylinder einer Schneckenspritzgießmaschine, wobei Einzelheiten des Schneckenantriebes der Übersichtlichkeit halber weggelassen sind.

In der Zeichnung ist eine Spritzeinheit gezeigt, die im wesentlichen aus einem Zylinder 1 und einer darin drehbar und axial verschiebbar gelagerten Schnecke 2 besteht. Der Zylinder 1 besitzt eine Düsenbohrung 3 und ist mit dem Düsenabschnitt 4 an ein nicht gezeigtes Werkzeug der Schneckenmaschine anlegbar. Die Schnecke 2 ist von einem ebenfalls nicht gezeigten Antriebsaggregat angetrieben, das ein Getriebe für die Schneckenrotation und einen hydraulisch betätigbaren Kolben für die Axialverschiebung der Schnecke beinhaltet.

Die Schnecke weist einen vorderen Schneckenabschnitt 5 und einen hinteren Schneckenabschnitt 6 auf, in denen Schneckengänge 7 bzw. 8 von ggf. unterschiedlicher Geometrie ausgebildet sind. Jedem der beiden Schneckenabschnitte 5, 6 ist eine Einfüllöffnung 9 bzw. 1o im Zylinder 1 zugeordnet, durch die aus einem Einfülltrichter 11 bzw. 12 die Schneckengänge 7 bzw. 8 mit Kunststoffmaterial unterschiedlicher Farbe und/oder Materialeigenschaft gefüllt werden können.

Die Schneckenabschnitte 5 und 6 sind voneinander durch eine zylindrische Schneckenschaftverdickung 13 getrennt, deren Außenfläche dichtend an der Zylinderinnenwand anliegt. Der Schneckengang 8 des hinteren Schneckenabschnitts 6 mündet zu schräg zur Schneckenachse hin verlaufenden Durchbrüchen 14, von denen beispielsweise vier vorgesehen sind, die zu einer Hohlbohrung 15 führen, welche die Schneckenschaftverdickung 13 und den ganzen vorderen Schneckenabschnitt 5 durchsetzt. Die Hohlbohrung 15 ist koaxial zu den Schneckengängen 5, 6 angeordnet und mündet zentral an der Schneckenspitze. Der Querschnitt der Hohlbohrung 15 ist auf das Fördervolumen des Schneckenganges 8 abgestimmt; es kann daran gedacht werden, bei Verarbeitung von thermoplastischen Kunststoffen durch eine Verkleinerung des Hohlbohrungsquerschnitts eine zusätzliche Friktion und dadurch Energieeinspeisung in das Kunststoffmaterial zu bewirken.

Die beiden Einfüllöffnungen 9 und 1o sind in einem solchen Abstand voneinander und von dem Düsenabschnitt 4 angeordnet, daß die vordere Einfüllöffnung 9 in keiner Phase des axialen Schneckenhubes in den Bereich des hinteren Schneckenabschnitts 6 gelangen kann.

Allenfalls kann die Anordnung so getroffen werden, daß in der - in der Zeichnung dargestellten - vorderen End- lage der Schnecke die vordere Einfüllöffnung 9 über der Schneckenschaftverdickung 13 zu liegen kommt, und entsprechend in der hinteren Endlage die hintere Einfüllöffnung 1o sich darüber befindet. Der Abstand der beiden Einfüllöffnungen 9 und 1o voneinander muß somit mindestens dem Ausmaß des Schneckenhubes entsprechen, was im Hinblick auf eine gute Plastifizierung immer erfüllt sein wird.

Beim Betrieb der Schnecke 2 wird durch den vorderen Schneckenabschnitt 5 einerseits und den hinteren Schneckenabschnitt 6 andererseits Kunststoffmaterial z.B. unterschiedlicher Farbe in den vor der Schneckenspitze befindlichen Sammelraum (Vereinigungsstelle) gefördert.

Die Zeitdauer, in der sich die beiden Kunststoffmaterialien im Sammelraum befinden, reicht zu einer Vermischung der beiden nicht aus, so daß lediglich ein Gemenge entsteht, in welchem die unterschiedlichen Farben in Form von Inseln oder Einschlüssen zu erkennen sind. Beim an die Plastifizierungsphase anschließenden Spritzhub der Schnecke wird dieses Gemenge dann durch die Düsenöffnung 3 ausgestossen und gelangt in das Werkzeug.

Der Erfindungsgedanke ist nicht auf Spritzgießmaschinen beschränkt, sondern lässt sich auch bei Extrudern oder dgl. verwirklichen. Hierbei braucht infolge des Wegfalls einer Axialbewegung der Schnecke auf die besonderen Abstände der Einfüllöffnungen voneinander nicht in der beschriebenen Weise geachtet zu werden.

– 1 –

Patentansprüche

1. Schneckenmaschine zur Herstellung von mehrfarbigen
Kunststoffteilen, die durch ein Gemenge von mindestens
zwei verschiedenen Kunststoffmaterialien einen Marmoreffekt aufweisen, mit einem Zylinder (1) und einer
drehbar darin gelagerten Schnecke (2) mit mindestens
zwei voneinander getrennten Schneckengängen (7, 8),
von denen jeder durch eine von zwei hintereinander im
Zylinder (1) ausgebildeten Einfüllöffnungen (9,1o) mit einem
der Kunststoffmaterialien beaufschlagbar ist und die die
beiden Kunststoffmaterialströme zu einer Vereinigungsstelle vor der Schneckenspitze fördern, dadurch gekennzeichnet, daß je einer der Schneckengänge (7, 8)
in einem von zwei axial voneinander getrennten
Schneckenabschnitten (5, 6) ausgebildet ist, die
gegeneinander im Zylinder (1) abgedichtet sind, und
daß der in Förderrichtung vordere Schneckengang (7)
unmittelbar zur Vereinigungsstelle hin mündet,
während der dahinter liegende Schneckengang (8) über
Durchbrüche (14) in der Schnecke (2) und eine im
vorderen Schneckenabschnitt (5) vorgesehene Hohlbohrung (15) mit der Vereinigungsstelle verbunden ist.

2. Schneckenmaschine nach Anspruch 1, dadurch gekennzeichnet, daß die beiden Schneckenabschnitte (5, 6)
durch eine dichtend an der Zylinderinnenwand anliegende Schneckenschaftverdickung (13) voneinander
getrennt sind.

3. Schneckenmaschine nach Anspruch 1 oder 2, dadurch
gekennzeichnet, daß die Durchbrüche (14) der
Schnecke (2) in der hinteren Stirnwand der Schneckenschaftverdickung (13) ausgebildet sind und schräg
zu der Hohlbohrung (15) hin verlaufen.

4. Schneckenspritzgießmaschine mit einer im Zylinder
axial verschiebbaren Schnecke nach einem der Ansprüche
1 bis 3, dadurch gekennzeichnet, daß sich der vordere
Schneckengang (7) in vorgeschobener Stellung der
Schnecke (2) am Ende des Spritzhubes gerade bis
zu der vorderen Einfüllöffnung (9) erstreckt.

0059408

Nummer der Anmeldung

Europäisches
Patentamt

**EUROPÄISCHER RECHERCHENBERICHT**

EP 82 10 1342.2

| | EINSCHLÄGIGE DOKUMENTE | | KLASSIFIKATION DER ANMELDUNG (Int Cl.³) |
|---|---|---|---|
| Kategorie | Kennzeichnung des Dokuments mit Angabe, soweit erforderlich, der maßgeblichen Teile | betrifft Anspruch | |
| X | <u>DE - C - 372 214</u> (MASCHINENBAU-ANSTALT GMBH) <br> * gesamtes Dokument * <br> -- | 1-3 | B 29 F 3/12 <br> B 29 F 3/01 <br> B 29 F 1/12 |
| A | <u>DE - A - 2 420 686</u> (CENTRE FOR INDUSTRIAL RESEARCH, LTD.) <br> * Anspruch 5; Fig. 1, 2 * <br> -- | 4 | |
| L,A | <u>DE - A1 - 2 836 842</u> (DEMAG KUNSTSTOFF-TECHNIK) <br> * Fig. * <br> -- | | **RECHERCHIERTE SACHGEBIETE (Int. Cl.³)** |
| A | <u>DE - A - 1 529 966</u> (KABEL- UND METALL-WERKE GUTEHOFFNUNGSHÜTTE AG) <br> -- | | B 29 C 21/00 <br> B 29 D 27/00 <br> B 29 F 1/00 <br> B 29 F 3/00 |
| A | <u>DE - A - St 4503 XII/39a</u> (STINNES VERWALTUNG GMBH) <br> * Fig. 1 * <br> -- | | |
| A | <u>DE - A1 - 2 704 950</u> (HENKEL KGaA) <br> ---- | | |

**KATEGORIE DER GENANNTEN DOKUMENTE**

X: von besonderer Bedeutung allein betrachtet
Y: von besonderer Bedeutung in Verbindung mit einer anderen Veröffentlichung derselben Kategorie
A: technologischer Hintergrund
O: nichtschriftliche Offenbarung
P: Zwischenliteratur
T: der Erfindung zugrunde liegende Theorien oder Grundsätze
E: älteres Patentdokument, das jedoch erst am oder nach dem Anmeldedatum veröffentlicht worden ist
D: in der Anmeldung angeführtes Dokument
L: aus andern Gründen angeführtes Dokument
&: Mitglied der gleichen Patentfamilie, übereinstimmendes Dokument

Der vorliegende Recherchenbericht wurde für alle Patentansprüche erstellt.

| Recherchenort | Abschlußdatum der Recherche | Prüfer |
|---|---|---|
| Berlin | 19-05-1982 | FINDELI |

EPA form 1503.1 06.78